# EUROPÄISCHE PATENTANMELDUNG

(11) **EP 1 106 887 A2**
(43) Veröffentlichungstag der Anmeldung: **13.06.2001**
(21) Anmeldenummer: 00126337.5
(22) Anmeldetag: 02.12.2000
(51) Int. Cl.: F16L 3/12

(54) **Permeationsarmer Elastomerschlauch für Kraftstoff, Öl oder das Kältemittel einer Klimaanlage**

(30) Priorität: 10.12.1999 DE 19959475
(71) Anmelder: Mündener Gummiwerk GmbH, 34346 Hann. Münden (DE)
(72) Erfinder: Möller, Thilo, 34346 Hann. Münden (DE)
(74) Vertreter: WALTHER, WALTHER & HINZ Patentanwälte

(57) **Zusammenfassung**

Elastomerschlauch, insbesondere permeationsarmer Schlauch, zum Beispiel für Kraftstoff, Öl oder das Kältemittel einer Klimaanlage, wobei der Schlauch (1) auf mindestens einem Schlauchabschnitt zur Erzeugung einer Schlauchkrümmung mindestens eine entsprechend gekrümmte Manschette (10) aufweist.

## Beschreibung

Die Erfindung betrifft einen Elastomerschlauch, insbesondere permationsarmer Schlauch, z. B. für Kraftstoff, Öl oder das Kältemittel einer Klimaanlage.

Elastomerschläuche der eingangs genannten Art sind bekannt; diese bestehen üblicherweise aus einem Geflecht aus Aramid- oder Polyesterfasern, wobei ein solches Geflecht durch Kautschuk ummantelt ist, der nach der Vulkanisation vernetzt ist, und infolgedessen dem Schlauch die erforderliche Stabilität verleiht.

In Abhängigkeit vom Anwendungsbereich des Schlauches ist nun bekannt, in der Schlauchinnenwandung eine permeationsarme hautartige Sperrschicht anzuordnen. Diese kann zum einen aus Fluorkautschuk bestehen, oder auch aus Fluorkunststoff. Interessant ist hierbei, dass die Sperrschicht aus Fluorkunststoff (THV) eine geringere Permeationrate aufweist, als eine Sperrschicht aus Fluorkautschuk (FPM).

Gleichfalls ist bekannt, dass der Platz im Motorraum aufgrund der Vielzahl der im Motorraum untergebrachten Aggregate zur Verlegung von Schläuchen beziehungsweise Leitungen allgemein immer kleiner wird. Von der Automobilindustrie wird daher gefordert, dass die Schläuche, also zum Beispiel Kraftstoffschläuche, Ölschläuche oder auch die Schläuche für das Kältemittel der Klimaanlage, eine Kontur aufweisen, die es ermöglicht, derartige Schläuche in die entsprechend hierfür vorgesehenen Freiräume im Motorraum zu legen. Das heißt, dass derartige Schläuche eine dreidimensionale Kontur besitzen. Nun ist ebenfalls bekannt, dass vulkanisierbare Schläuche durch den Vorgang der Vulkanisation auch in eine bestimmte Form überführt werden können. Eine Formgebung der Schläuche durch Vulkanisation ist allerdings nicht ganz einfach; ein normales Biegen eines Schlauches in einer Schablone verbietet sich deshalb, weil hiermit immer eine Querschnittsverminderung einhergeht. Folglich ist erforderlich, dass in den Schlauch ein Dorn eingeschoben wird, der dafür sorgt, dass eben eine solche Querschnittsverminderung während der Formgebung nicht stattfindet. Nach dem Stand der Technik ist z. B. bekannt, einen anvulkanisierten oder vorvulkanisierten Kautschukschlauch auf einen geraden Dorn aus speziellem Kunststoff zu schieben, den Schlauch samt Dorn in eine Schablone mit der späteren Schlauchkontur zu legen, und danach den Schlauch samt Schablone in eine Wärmekammer zur Ausvulkanisation des Schlauches zu geben. Diese Methode ist durchaus erfolgversprechend bei Schläuchen mit einer Innenschicht aus einer Fluorkautschukfolie. Aufgrund des Aufwandes sind zwar vernünftige Ergebnisse hinsichtlich des Ausschusses zu erzielen, jedoch ist die Herstellung, wie ausgeführt, relativ aufwendig und damit teuer.

Jedoch ist der Anteil an Ausschuss bei Schläuchen mit einer hautartigen Sperrschicht aus Fluorkunststoff wesentlich höher, weil die Gefahr, dass sich im Innenradius der Krümmungen Falten in der hautartigen Sperrschicht bilden, beziehungsweise im Außenradius gegebenenfalls Risse entstehen gegenüber Schläuchen mit einer Sperrschicht aus Fluorkautschuk wesentlich größer ist.

Unabhängig von der Frage des Ausschusses ist der Aufwand bei der Herstellung derartiger Schläche in beiden Fällen sehr hoch, was sich insbesondere daraus ergibt, dass der Dorn zunächst einmal in den Schlauch eingeführt werden muss, und dann auch der Schlauch wieder entdornt werden muss, was problematisch und schwierig ist, wenn man sich vor Augen hält, dass der Schlauch gegebenenfalls eine Vielzahl von Krümmungen aufweist, und entsprechend der Widerstand beim Herausziehen des Dornes relativ hoch wird.

Eine zusätzliche Schwierigkeit entsteht dadurch, dass der Dorn nach seiner Entdornung nicht in seine Ausgangsform zurückgeht, sondern im Wesentlichen die Form hat, die der fertige Schlauch nach der Vulkanisation aufweist. Das heißt, dass der Dorn zur Wiederverwendung gerade gerichtet werden muss. Hierzu ist vorgesehen, dass der Dorn im erwärmten Zustand in ein Rohr geschoben wird, wo er dann gerade gerichtet wird. Das heißt, dass egal für welche Art des Schlauches, ob mit einer hautartigen Sperrschicht aus Fluorkunststoff oder Fluorkautschuk der Aufwand zur Formgebung des Schlauches sehr hoch ist.

Der Erfindung liegt daher die Aufgabe zu Grunde, einen Elastomerschlauch der eingangs genannten Art in gebogener Form bereitzustellen, wobei die Erzeugung der gewünschten Kontur einfach und preiswert vonstatten gehen soll. Gegenstand der Erfindung ist ebenfalls die Bereitstellung von Verfahren, die eine derartige Formgebung eines Schlauches ermöglichen.

Die Aufgabe wird erfindungsgemäß dadurch gelöst, dass der Schlauch auf mindestens einem Schlauchabschnitt zur Erzeugung einer Schlauchkrümmung mindestens eine entsprechend gekrümmte Manschette aufweist. Eine solche Manschette besteht beispielsweise aus thermoplastischem Kunststoff oder Metall und kann bei entsprechender Vorformung den Schlauch in die vorgesehene Kontur bringen. Wesentlich hierbei ist, dass die Manschette den Schlauch lediglich abschnittweise erfasst, um die notwendige Flexibilität des Schlauches für den Einbau im Motorraum nicht zu beeinträchtigen. Vorteilhaft bei dieser Art der Formgebung des Schlauches ist, dass der Schlauch fertig vulkanisiert sein kann. Das bedeutet, dass bei der Verformung des Schlauches sich keinerlei Falten oder Risse im Bereich der Krümmungen in der hautartigen Sperrschicht aus Fluorkautschuk oder Fluorkunststoff mehr bilden können, weil durch die Vulkanisation eine innige Verbindung zwischen hautartigen Sperrschicht und der sie umgebenden Kautschukschicht erfolgt ist.

In Bezug auf die Manschette ist bei einer Ausführungsform vorgesehen, dass die Manschette als Formling ausgebildet ist, das heißt, eine Form aufweist, die der Krümmung entspricht, die der Schlauch nach Umgreifen durch die Manschette einnehmen soll. Um eine Relativbewegung zwischen Schlauch und Manschette zu vermeiden, ist weiterhin vorgesehen, dass die Manschette mit dem Schlauch verbunden z. B. verklebt ist.

Hierbei besteht die Manschette, vorzugsweise aus mindestens zwei entsprechend der Krümmung vorgeformte Halbschalen, die nach Einlegen des Schlauches miteinander verbindbar sind, beispielsweise durch Verschweißen, Verrasten oder Verkleben. Zur Herstellung wird demzufolge vorgeschlagen, dass der Schlauch in die gekrümmte Manschette bestehend aus zwei Teilelementen, z.B. in Form von Halbschalen eingelegt wird, die miteinander verbindbar sind und so dem Schlauch die gewünschte Kontur geben.

Ein anderes Verfahren zur Herstellung eines gekrümmten Elastomerschlauches zeichnet sich dadurch aus, dass der vulkanisierte Schlauch in eine Spritzform mit gewünschter Kontur eingelegt wird, und der Schlauch im Bereich der Krümmungen mit einem thermoplastischen Kunststoff umspritzt wird.

Ein weiteres Verfahren zur Herstellung eines gekrümmten Elastomerschlauches zeichnet sich dadurch aus, dass der vulkanisierte Schlauch in eine Manschette aus thermoplastischem Material eingebracht wird, und im Nachhinein die Manschette samt Schlauch entsprechend der gewünschten Kontur gebogen wird. Das heißt, dass die Manschette zunächst gerade ist, und erst im Nachhinein die geforderte Kontur einnimmt, wobei das Biegen von Schlauch und Manschette in einer Matrize unter Wärmezufuhr erfolgt.

Anhand der Zeichnung wird die Erfindung nachstehend beispielhaft näher erläutert.
- Fig. 1: zeigt den Abschnitt eines Schlauches mit einer Manschette;
- Fig. 2: zeigt einen Schnitt gemäß der Linie 11-11 aus Figur 1;
- Fig. 3: zeigt die Manschette im aufgeklappten Zustand.

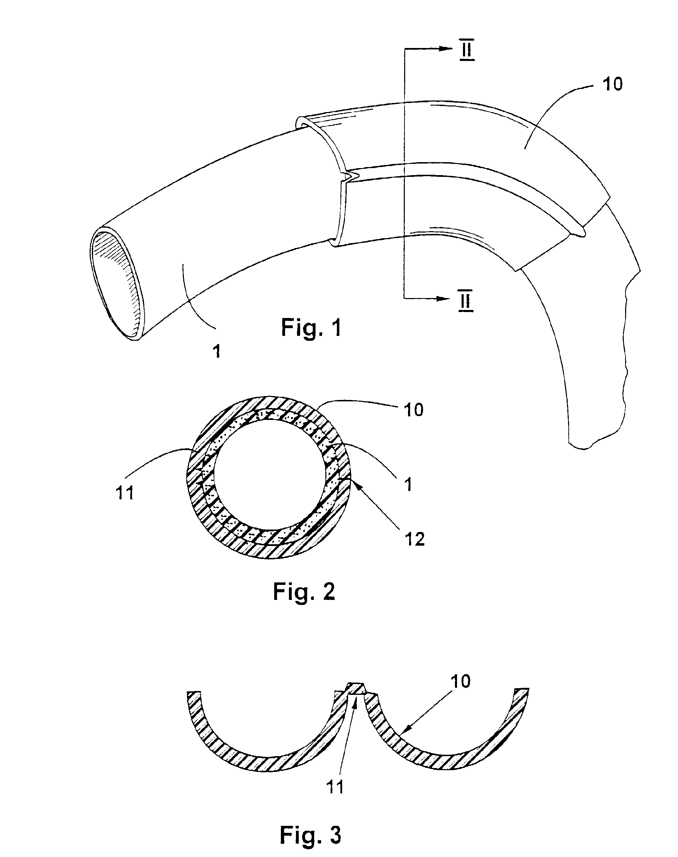

Gemäß der Figur 1 liegt der insgesamt mit 1 bezeichnete Schlauch in der mit 10 bezeichneten Manschette ein. Die Manschette 10 zeigt seitlich ein Filmscharnier 11 und ist im Bereich des Pfeiles 12 verschweißt beziehungsweise verklebt. Gleiches ergibt vom Ergebnis her in Bezug auf die Darstellung der Manschette gemäß Figur 3.

## Patentansprüche

1. Elastomerschlauch, insbesondere permeationsarmer Schlauch, zum Beispiel für Kraftstoff, Öl oder das Kältemittel einer Klimaanlage,
**dadurch gekennzeichnet**,
dass der Schlauch (1) auf mindestens einem Schlauchabschnitt zur Erzeugung einer Schlauchkrümmung mindestens eine entsprechend gekrümmte Manschette (10) aufweist.

2. Elastomerschlauch nach Anspruch 1,
**dadurch gekennzeichnet**,
dass der Schauch (1) vulkanisiert ist.

3. Elastomerschlauch nach Anspruch 1 oder Anspruch 2,
**dadurch gekennzeichnet,**
dass der Schlauch (1) schlauchinnenseitig eine hautartige Sperrschicht aufweist.

4. Elastomerschlauch nach Anspruch 3,
**dadurch gekennzeichnet**,
dass die hautartige Sperrschicht aus Fluorkautschuk (FPM) oder Fluorkunststoff (THV) besteht.

5. Elastomerschlauch nach Anspruch 1,
**dadurch gekennzeichnet**,
dass die Manschette (10) aus thermoplastischem Kunststoff besteht.

6. Elastomerschlauch nach Anspruch 1,
**dadurch gekennzeichnet,**
dass die Manschette (10) als Formling ausgebildet ist.

7. Elastomerschlauch nach Anspruch 6,
**dadurch gekennzeichnet**,
dass der Formling (10) aus mindestens zwei verbindbaren Teilelementen besteht.

8. Elastomerschlauch nach einem der voranstehenden Ansprüche,
**dadurch gekennzeichnet**,
dass die Manschette (10) auf dem Schlauch fixiert, zum Beispiel geklebt ist.

9. Verfahren zur Herstellung eines gekrümmten Elastomerschlauches,
**dadurch gekennzeichnet,**
dass der vulkanisierte Schlauch (1) durch Einlegen des Schlauches in mindestens eine gekrümmte Manschette (10) eine ebensolche Krümmung erhält.

10. Verfahren nach Anspruch 9,
**dadurch gekennzeichnet**,
dass die Manschette (10) mindestens zwei Teilelemente aufweist, die nach Einlegen des Schlauches miteinander, zum Beispiel durch Verschweißen, Verrasten oder Verkleben, verbindbar sind.

11. Verfahren zur Herstellung eines gekrümmten Elastomerschlauches,
**dadurch gekennzeichnet**,
dass der vulkanisierte Schlauch (1) in eine Spritzform mit gewünschter Kontur eingelegt wird, und der Schlauch im Bereich der Krümmungen mit einem thermoplastischen Kunststoff umspritzt wird.

12. Verfahren zur Herstellung eines gekrümmten Elastomerschlauches,
**dadurch gekennzeichnet**,
dass der vulkanisierte Schlauch in eine Manschette (10) aus thermoplastischem Kunststoff eingebracht wird, und im Nachhinein die Manschette samt Schlauch entsprechend der gewünschten Form gebogen wird.

13. Elastomerschlauch nach Anspruch 12,
**dadurch gekennzeichnet,**
dass das Biegen in einer Matrize erfolgt.

14. Elastomerschlauch nach Anspruch 12,
**dadurch gekennzeichnet,**
dass die Manschette (10) zum Biegen erwärmt wird.
